# EUROPEAN PATENT APPLICATION

(11) **EP 1 514 501 A1**
(43) Date of publication of application: **16.03.2005**
(21) Application number: 03725224.4
(22) Date of filing: 23.05.2003
(51) Int. Cl.: A47J 37/04

(54) **AUTOMATIC FOOD-HEATING DEVICE**

(30) Priority: 24.05.2002 ES 200201198
(71) Applicant: CONSEJO SUPERIOR DE INVESTIGACIONES CIENTIFICAS, 28006 Madrid (ES)
(72) Inventor: AKINFIEV, Theodore, Inst. de Automatica Industrial, 28500 Arganda Del Rey (Madrid) (ES); ARMADA RODRIGUEZ, M., Inst. Automatica Industrial, 28500 Arganda Del Rey (Madrid) (ES)
(74) Representative: Ungria Lopez, Javier
(86) International application number: PCT/ES2003/000245
(87) International publication number: WO 2003/099085

(57) **Abstract**

The invention relates to an automatic food-heating device comprising a body which houses a food container comprising individual receptacles, a food heating element, a food delivery window and a transport system which is used to move the food receptacles individually from the container to the heating element and from the heating element to the delivery window. The purpose of the invention is to broaden the possibilities of the device by rotating the food as being heated. In this way, the food is heated more uniformly and, as a result, the consumption quality thereof is improved.

## Description

### Field of the invention

This invention is related to the field of automisation, and more specifically to the processes of supply, dispatch, dispensing and/or sale of products.

### State of the Art

Various technical devices are known that permit the sale of products without the seller's wrapping [1,2]. The known technical solutions describe a device for the sale of products, including food, with a body wherein there is a store of food products with individual containers, a food heater, a window for the delivery of food and a transport system for the individual conveyance of food containers from the store to the heater and from the heater to the delivery window.

The defect of known technical solutions [1,2] is that their technological possibilities are insufficient. This is manifested in the fact that, when using such devices, foods that require heating are conveyed to the heater, wherein the food is heated without simultaneous rotation. This leads to a non-uniform heating of food which reduces the quality of the process of preparing the food for its use. This effect is intensely manifested in cases wherein microwaves are used as the food heater. The irradiation of microwaves within the heater is not uniformly distributed in space, which leads to excessive heating of certain parts of the food to be heated and insufficient heating of other parts of the food.
1. Apparatus for heating and dispensing food
   Patent Number US 5,522,310
   Publication date 4-06-1996
   Inventor(s) Gary W. Black, David Garvey
   Int. CL G07F 11/00
2. Automatic Food Dispenser
   Patent Number US 5,144,879
   Publication date 8-08-1992
   Inventor(s) Marion Alesi
   Int. CL A47J 37/00, H05B 6/68, H05B 6/78

### Description of the Invention

### Brief description of the invention

Automatic food-heating device comprising a body which houses a store for food with individual containers, a food heater, a window for delivery of food and a transport system for the individual conveyance of food containers from the store to the heater and from the heater to the delivery window, the heater has a rotating support for the food container, the transport system contains a double conveyor belt (or double chain, or double cord), whose individual belts (or chains, or cords) are synchronised and arranged in parallel at a distance less than the minimum horizontal size of the container, but greater than the horizontal size of the rotating support for food in the heater, the individual conveyor belts are arranged symmetrically in relation to the axis of rotation of the rotating support, the double conveyor belt can move in the vertical direction, being limited in its upper part in such a way that the lower part of the container placed on the double conveyor belt is located higher than the upper part of the rotating support for food, and limited in its lower part in such a way that the container rests on the rotating support and does not touch the conveyor belt.

### Detailed description of the invention

The objective of the invention is to expand the functional possibilities of the device by means of rotating the food during the heating. This will enable a more uniform heating of the food to be obtained and therefore to improve its consumption qualities.

Automatic food-heating device comprising a body which houses a store for food with individual containers, a food heater, a window for delivery of food and a transport system for the individual conveyance of food containers from the store to the heater and from the heater to the delivery window, the heater has a rotating support for the food container, the transport system contains a double conveyor belt (or double chain, or double cord), whose individual belts (or chains, or cords whose cross-section can be circular, rectangular or elliptical) are synchronised and arranged in parallel at a distance less than the minimum horizontal size of the container, but greater than the horizontal size of the rotating support for food in the heater, the individual conveyor belts are arranged symmetrically in relation to the axis of rotation of the rotating support, the double conveyor belt can move in the vertical direction, being limited in its upper part in such a way that the lower part of the container placed on the double conveyor belt is located higher than the upper part of the rotating support for food, and limited in its lower part in such a way that the container rests on the rotating support and does not touch the conveyor belt.

The double conveyor belt can rotate around a horizontal axis, located outside the heater and orientated perpendicularly to the movement of the belt. The conveyor belt has a spring and a limit element, and it can be highlighted that in the absence of exterior actions the double conveyor belt rotates around the horizontal axis until the limit element, due to the influence of the spring. At least one of the individual belts of the conveyor belt includes a projection with the possibility of interaction with the response part, located in the base. The heater has a hatch located with the possibility of moving in the vertical direction and interacting with the double conveyor belt; the closed position of the hatch corresponds to the lowest position of the double conveyor belt. The transport system contains a device for carrying out the perforation of the wrapping material for the food.

The method of control of the automatic heating device consists of the food being conserved in the store and being conveyed by the conveyor belt to the heater, being heated and, with the help of the double conveyor belt, being transported to the delivery window following the transfer of the food container to the heater, the conveyor belt is lowered to the point at which the container comes into contact with the rotating support and ceases to interact with the double conveyor belt, the rotation of the food container is done with the help of the rotating support during the heating, at the end of the heating the food container stops rotating and the double conveyor belt is then raised up to the upper position until the food container rests on the double conveyor belt and the food container does not touch the rotating support, the food container is then conveyed to the delivery window. Prior to heating the food container, the wrapping material for the food is perforated at one or several points.

Such an execution permits the functional possibilities of the apparatus to be expanded by means of rotating the food during its heating, which is especially important when using microwaves for heating. With such an execution of the device, a more uniform heating of the food is achieved, which improves its consumption qualities. In comparison with other possible technical solutions related to the operation of loading-offloading of the heater with the help of a special robot, the technical solution that is proposed becomes considerably more simple and cheap.

### FUNCTIONING PROCESS

The functioning of the device is as follows. In the initial position, the food store is full of individually wrapped food, for example, portions of pizza, located on individual semi-rigid (or rigid) trays of a plastic material or material of special composition with a cylindrical, conical or rectangular shape 1. In the upper part of the trays there exists a widened part 2, sealed above and with a cover of plastic or special fine material 3.

The tray 1 with the food is expelled from the store with the help of the usual methods (for example, with a screw thruster or spiral thruster, etc.), and the tray 1 is then conveyed with the help of the usual methods (for example, inclined grooves which permit the displacement of the object with the action of the force of gravity, or a special additional chain, etc.) to the double conveyor belt in such a way that the widened part 2 of the tray 1 at the same time rests on the two belts of the chain 4. Those belts 4 are supported on the support 5 which has an opening with an inlet and an outlet 6, symmetrically arranged with respect to the belts of the double conveyor belt and which has a size greater than the diameter of the tray 1.

The shaft 8, which performs the movement of the belts of the chain 4, rotates with the help of the motor 7. At the same time the tray 1 is conveyed in the direction towards the food heater 9 (for example, the microwave). The conveyance of the tray 1 ends at the moment in which its position corresponds to the position of the rotary support 10 (the corresponding position is understood as being the position of the tray 1 such that ensures the possibility of locating the tray 1 on the rotating support 10 so that the centre of the tray 1 coincides with the centre of the rotating support when that part of the double conveyor belt that is within the food heater is lowered). After that, the part of the double conveyor belt that is within the food heater is lowered. This movement can be done in different ways. One of the possibilities is for the chain to be fixed in vertical guides with the possibility of vertical translation movement of the entire double conveyor belt, for example, with the help of a special actuator. Another possibility is for the double conveyor belt to be fixed in the horizontal axis with the possibility of rotary movement; when that end of the double conveyor belt located in the food heater is lowered, the other end of the double conveyor belt rises up. The third possibility is for the double conveyor belt to be fixed with the help of a parallelogram mechanism; in this case the mechanism is progressively displaced via the arc of the circumference.

During the lowering of the double conveyor belt the tray 1 comes into contact with the rotating support 10. The double conveyor belt ceases to be lowered at the moment in which sufficient space is generated between the widened part 2 of the tray 1 and the individual belts of the double conveyor belt 4, so that, during the rotation of the tray 1, its widened part does not come into contact with the individual belts of the double conveyor belt.

The hatch of the food heater can be made in the form of two parts: the mobile part 11 and the immobile part 12, securely joined to the body of the food heater. The immobile part 12 can be used as support, which limits the vertical movement of the double conveyor belt. The mobile part 11 of the hatch can be fixed in vertical directrices with the possibility of vertical movement or it can be fitted with a horizontal rotating shaft. The opening and closing of the hatch is done with the help of a special actuator. The mobile part 11 of the hatch is closed before the food heater is switched on. Simultaneously with switching on the food heater, the actuator of the rotary support 10 is switched on (the actuator itself is located outside the heating zone and is cinematically connected to the rotary support), and when the food heater is switched off so too is the actuator of the rotary support 10. The disconnection of the heater is done either with the help of a timer or by means of a temperature sensor signal, when a pre-set temperature is reached in the food heater.

After completion of the food heating process, the mobile part 11 of the hatch for the food heater opens and the double conveyor belt is raised up to the initial position (for example, that defined with a special support). In this position, the tray 1 ceases to make contact with the rotary support 10. The motor 7 starts up and the tray 1 with the heated food is moved with the help of the belts of the double conveyor belt 4 from the heater to the position wherein the double conveyor belt was in at the initial moment. Another termination of the process is also possible, but this requires a certain modification to the device.

So, the shaft 8 of the double conveyor belt fitted with a motor can be combined, and not cylindrical. In the middle part of the shaft there exists a turning whose width (size A) corresponds to the distance between the two belts of the double conveyor belt, and the depth of the turning (size B) exceeds the height of the base of the tray 1 at the widened part 2 of the tray. In this case, the tray 1 does not necessarily need to stop in the position at which it is found in the initial instant. The continuation of the movement of the belts of the double conveyor belt is going to cause the tray to move until the far end of the chain and enter into a special container for prepared foods (for example, created in the form of an inclined plane with a horizontal table at one end). In this case, there is no need to use a special device for eliminating the trays from the double conveyor belt.

The apparatus can be complemented with a special device for the perforation of the covers of the tray made of plastic or special material. This device is intended to break the seal of the wrapping for the food before the food is subjected to heating (for example, in the initial position of the tray in the double conveyor belt). The device contains an electromagnet 13 with one or several moving needles 14 fixed above the double conveyor belt. The needles contain plates 15 (made of a magnetic material, such as iron) and springs 16. In the initial position of the device, the electromagnet 13 is off, and all the needles 14 are raised by virtue of the action of the springs 16. At the moment when the tray, whose plastic cover needs to be perforated, is positioned beneath the device, the electromagnet comes on for a short time, the plates 15 (under the action of the electromagnet) are attracted to it, thereby ensuring the downwards movement of the needles 14. With this movement, the needles 14 perforate the cover of the tray. Once the electromagnet has been disconnected, the needles return to their initial position under the action of the springs.

The device can be completed with a device for cleaning the needles. For example, the device for cleaning the needles can be made in the form of a container with sprayers for the supply and spraying of the cleaning liquid at high pressure from a special pump, sprayers for the supply of compressed air and a tube for diverting the liquid and air away from the container. In this case, the device for perforating the plastic covers is mobile (for example, fixed in directrices permitting horizontal and vertical movement, and provided with the corresponding actuators). Once the perforation of the following cover has been performed, the device is displaced to the container in such a way that the magnet remains pressing against the upper part of the container and the needles are located within the container. After that, the sprayers with the cleaning liquid are turned on and the liquid cleans the needles. After finishing the cleaning, the sprayers containing air are turned on in order to dry the needles. The air supply is then disconnected and the device for perforation of the covers is displaced to the initial position in order to allow the needles to perforate the cover of the new tray.

When using the oven as a food heater, all the elements to be found inside the oven (the belts of the double conveyor belt, the motorless shaft of the double conveyor belt, the support for the belts of the double conveyor belt, the rotary support) must be made of heat resistant materials. Due to using microwaves, all these elements must be made of materials that do not heat up under the action of microwave irradiation, for example, be made of plastics of special composition which have sufficient resistance to heat for interacting with the hot tray.

The double conveyor belt can be fitted with a special spring 17, adjusted in such a way that the double conveyor belt together with the tray on top of it occupies the extreme upward position (for example, defined by a special support). In this case, for the vertical displacement there is no need to have a special actuator in order to perform this movement. It can be carried out with the help of the actuator for the mobile hatch 11 of the food heater or with the help of the motor 7 of the double conveyor belt (in this latter case, at least one belt of the double conveyor belt must contain a special projection with the possibility of interaction with the immobile response part).

Detailed description of the drawings (as appropriate)

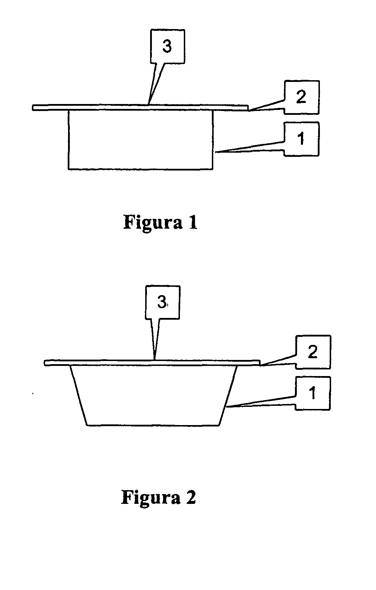

Figure 1. The cylindrical tray
Figure 2. The conic tray

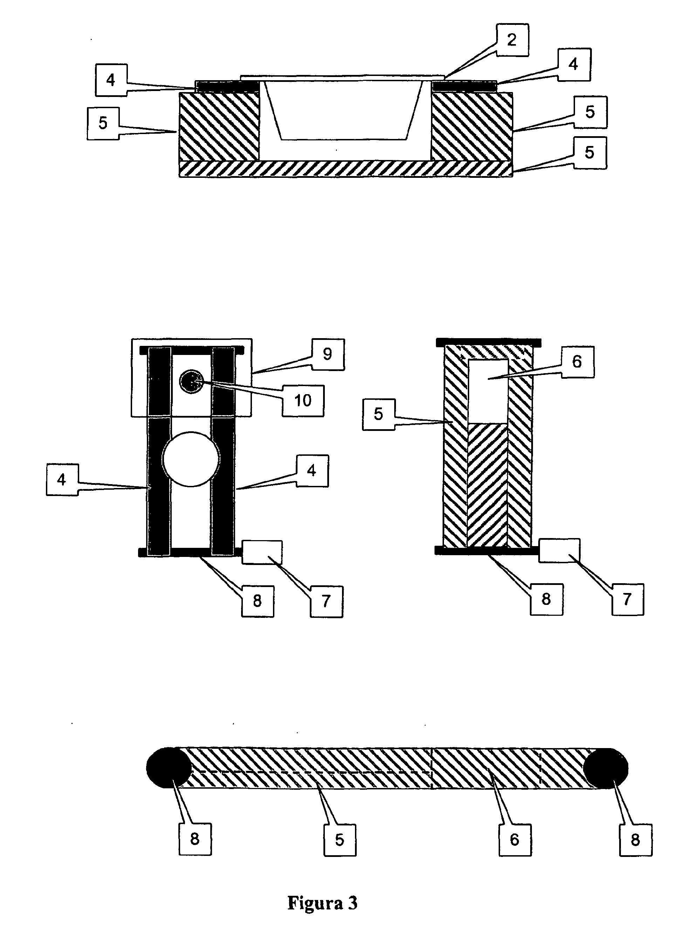

Figure 3. The double conveyor belt

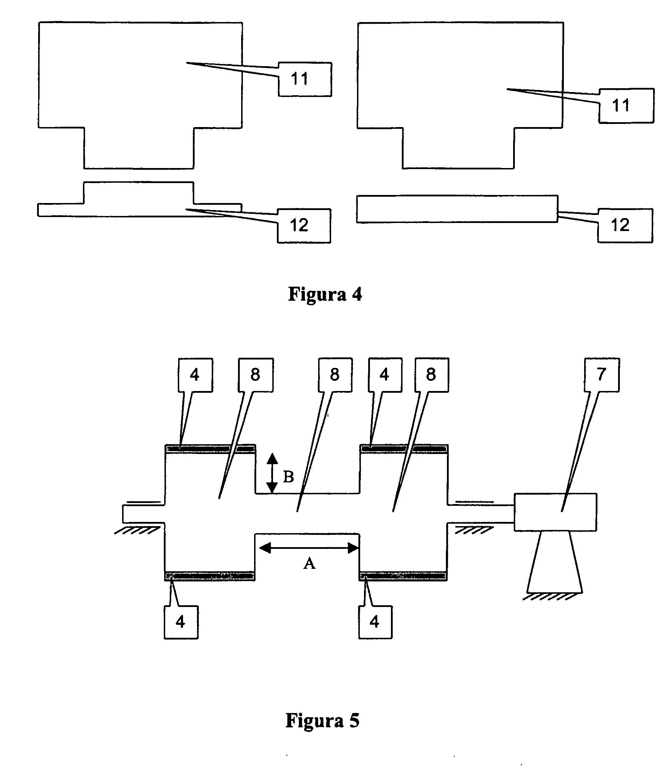

Figure 4. The hatch of the food heater
Figure 5. The combined shaft of the double conveyor belt (cross-section)

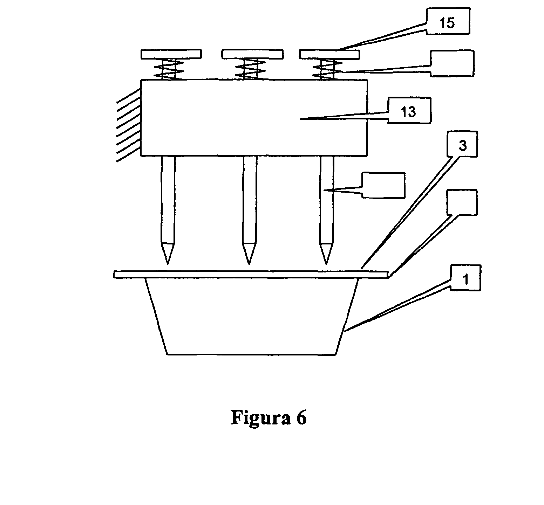

Figure 6. The device for perforating the plastic covers of the tray

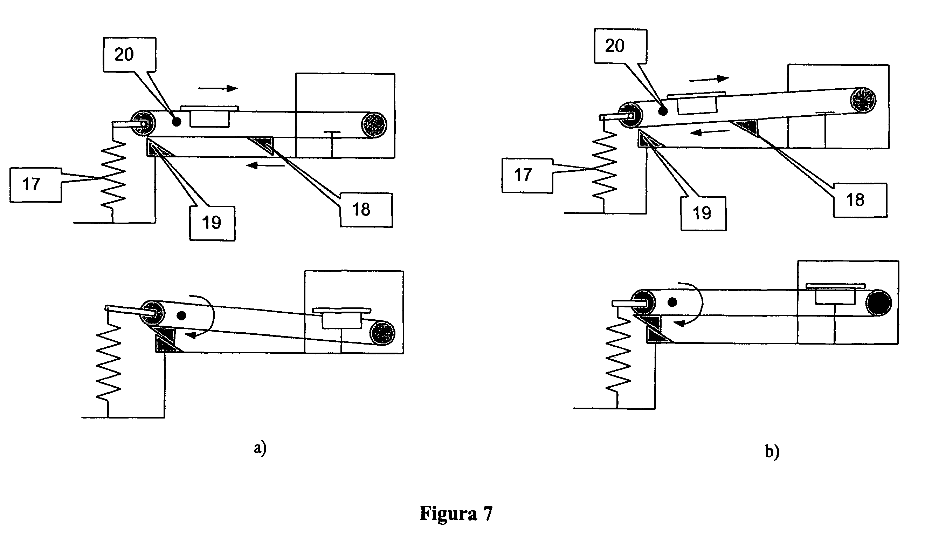

Figure 7. Displacement of the double conveyor belt with the help of a projection in the belt of the double conveyor belt

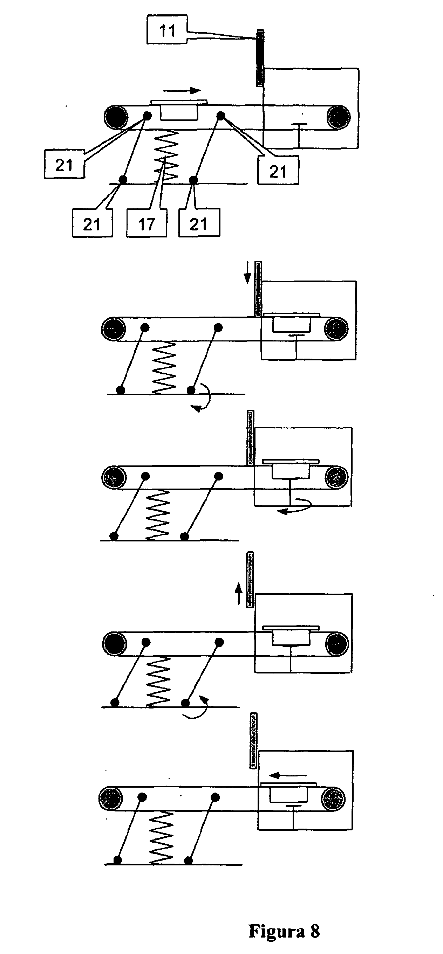

Figure 8. The double conveyor belt with a parallelogram mechanism
   1. The tray
   2. The widened part of the tray
   3. The plastic cover of the tray
   4. The belt of the double conveyor belt
   5. The support for the belt of the double conveyor belt
   6. The opening
   7. The motor
   8. The shaft of the double conveyor belt
   9. The food heater
   10. The rotating support
   11. The mobile part of the hatch of the food heater
   12. The immobile part of the hatch of the food heater
   13. The electromagnet
   14. The moving needle
   15. The plate made of magnetic material
   16. The spring for the needle
   17. The spring for the chain
   18. The projection in the belt of the double conveyor belt
   19. The immobile part of the projection response
   20. The horizontal axis of rotation of the double conveyor belt
   21. The parallelogram mechanism

### Example of embodiment of the invention

**Example 1**. The food heater 9 is created in the form of an oven which has a rotating support 10. The double conveyor belt is driven by a cylindrical shaft 8 connected to the motor 7. The double conveyor belt has a horizontal rotating shaft 20. The shaft 8 of the double conveyor belt is connected by a spring 17 to a fixed base. In the lower part of the belt of the double conveyor belt there is a projection 18 positioned with the possibility of interacting with the immobile response part 19. The projection and the response part are located in such a way that after displacement of the tray within the oven the projection starts to interact with the response part. This leads to the turning of the double conveyor belt around its horizontal shaft 20. The movement of the belt of the double conveyor belt ends at the moment when the tray starts to rest on the rotating support, and between the widened part of the tray and the belt of the double conveyor belt a previously defined gap is created. After completing the heating of the tray the belt of the double conveyor belt starts to move in the opposite direction, the projection 18 ceases to interact with the response part 19, the conveyor belt returns to the initial position (defined by the corresponding support) under the action of the spring, the tray ceases to interact with the rotating support and rests on the individual belts of the conveyor belt which displace it to the initial position.

Example 2. The food heater 9 is created in the form of a microwave oven which has a rotating support 10. The double conveyor belt is driven by a combined shaft 8 connected to the motor 7. The double conveyor belt has a parallelogram mechanism 21 for the vertical movement of the conveyor belt and it has a spring 17 connected to a base. The tray 1 is displaced to the double conveyor belt from the initial position of the store with the help of traditional methods. In the initial position, the device for perforating the covers of the trays performs the perforation of the cover of the tray. After that, the double conveyor belt displaces the tray within the food heater as far as the corresponding position defined by a special support (the rear part of the opening 6 of the support 5 of the double conveyor belt can be used as such a support). The mobile part of the hatch 11 is at that moment in the raised position. The mobile part of the hatch is lowered with the help of a special actuator in such a way that it starts to press on the double conveyor belt and lower it down to the position determined by the support when the tray is resting on the rotating support, and a previously defined gap is created between the widened part of the tray and the belts of the chain. The food heater switches on and the rotating support starts to move. When the heating is completed, the heater disconnects and the rotating support stops turning. The mobile part of the hatch 11 opens. In the meantime, the double conveyor belt rises up to the initial position defined by the support. The tray is withdrawn from the heater with the help of the double conveyor belt and the movement of the belts of the double conveyor belt is halted only after the tray is completely withdrawn from the belt of the double conveyor belt in the corresponding container.

## Claims

1. Automatic food-heating device containing a body which houses a store for food with individual containers, a food heater, a window for delivery of food and a transport system for the individual conveyance of food containers from the store to the heater, and from the heater to the delivery window, **characterized in that** the heater has a rotating support for the food container, the transport system contains a double conveyor belt, whose individual belts are synchronised and arranged in parallel at a distance less than the minimum horizontal size of the container, but greater than the horizontal size of the rotating support for food in the heater, the individual conveyor belts are arranged symmetrically in relation to the axis of rotation of the rotating support, the double conveyor belt can move in the vertical direction, being limited in its upper part in such a way that the lower part of the container placed on the double conveyor belt is located higher than the upper part of the rotating support for food, and limited in its lower part in such a way that the container rests on the rotating support and does not touch the conveyor belt.

2. The device according to claim 1, **characterized in that** the double conveyor belt can rotate around a horizontal shaft located outside the heater and orientated perpendicularly to the movement of the belt.

3. The device according to claims 1 or 2, **characterized in that** the conveyor belt has a spring and a limit element, highlighted is the fact that in the absence of exterior actions the double conveyor belt rotates around the horizontal axis as far as the limit element, due to the influence of the spring.

4. The device according to claims 1-3, **characterized in that** at least one of the individual belts of the conveyor belt includes a projection with the possibility of interaction with the response part, located in the base.

5. The device according to claims 1,2, **characterized in that** the heater has a hatch located with the possibility of moving in the vertical direction and interacting with the double conveyor belt; the closed position of the hatch corresponds to the lowest position of the double conveyor belt.

6. The device according to claims 1-5, **characterized in that** the transport system contains a device for carrying out perforation of the wrapping material for the food.

7. A method of control of an automatic food-heating device consisting of the food being conserved in the store and being conveyed by the conveyor belt to the heater, it is heated and, with the help of the double conveyor belt, is transported to the delivery window which is differentiated in that, following the transfer of the food container to the heater, the double conveyor belt is lowered to the point at which the container comes into contact with the rotating support and ceases to interact with the double conveyor belt, the rotation of the food container is done with the help of the rotating support during the heating, at the end of the heating the food support stops rotating and the double conveyor belt is then raised up to the upper position until the food container rests on the double conveyor belt and the food container does not touch the rotating support, the food container is then conveyed to the delivery window.

8. The method according to claim 7, **characterized in that** prior to heating the food container, the wrapping material for the food is perforated at one or several points.
